# EUROPEAN PATENT SPECIFICATION

(11) **EP 1 423 549 B1**
(45) Date of publication and mention of the grant of the patent: **16.08.2006**
(21) Application number: 02765734.5
(22) Date of filing: 02.09.2002
(51) Int. Cl.: C22C 38/44, C22C 38/52, C22C 38/54

(54) **USE OF A DUPLEX STAINLESS STEEL ALLOY**
VERWENDUNG EINER DUPLEXEDELSTAHLLEGIERUNG
UTILISATION D'UN ALLIAGE D'ACIER INOXYDABLE DUPLEX

(30) Priority: 02.09.2001 SE 0102932
(43) Date of publication of application: 02.06.2004
(73) Proprietor: Sandvik Intellectual Property AB, 811 81 Sandviken (SE)
(72) Inventor: SUNDSTRÖM, Ann, S-811 36 Sandviken (SE); NYSTRÖM, Anna-Lena, S-811 32 Sandviken (SE); KANGAS, Pasi, S-811 36 Sandviken (SE)
(74) Representative: Taquist, Henrik Lennart Emanuel
(86) International application number: PCT/SE2002/001565
(87) International publication number: WO 2003/020995

(56) References cited:
- EP-A1- 0 455 625
- EP-A1- 0 534 864
- EP-A1- 0 897 018
- EP-A2- 0 220 141
- EP-A2- 0 683 241
- US-A1- 2001 003 121

## Description

### TECHNICAL FIELD OF THE INVENTION

The present invention relates to a use of a stainless steel alloy, more specifically a use of a duplex stainless steel alloy with high resistance to corrosion in combination with good structural stability and a combination of mechanical properties which make it suitable for use in applications in environments where a high corrosion resistance is required as in chloride-containing environments, such as oil refining processes and hydro metallurgical processes.

### BACKGROUND OF THE INVENTION

A duplex stainless steel with high corrosion resistance and good structural stability is disclosed in EP 0 220 141. The alloy is used in applications where the presence of chloride ions gives rise to a high corrosivity. Another corrosion resistant duplex stainless steel, intended for use in chloride containing solutions, is disclosed in EP 0 534 864.

In connection with that the natural accessibility to the natural resources such as e.g. minerals and metals become more and more limited, the deposits smaller and smaller and of poorer quality, one tries to find new deposits or such which hitherto have not been exploited because of too high costs for the exploitation of such deposits and the following refinement. They can be situated e.g. rocks where very hard and for conventional extraction unendurable conditions prevail, by high temperatures, contaminated environment and salt-bearing subsoil water. In particular, this concerns minerals and metals, such as e.g. nickel and bauxite for the production of aluminum. Deposits in rocks, which hitherto have been out of reach for a cost-effective extraction, can with help of new extraction methods become accessible, as e.g. by hydro metallurgy.

There one will meet new requirements on the metallic materials, which regarding a combination of corrosion- and mechanical properties, where above all duplex stainless steel alloys are established and become more and more successful, because they resist different types of corrosion at the same time as high temperatures and high pressures together with mechanical stresses, which can lead to erosion corrosion.

Hitherto used metallic materials are titanium-alloyed and super duplex alloys. The superduplex steel Zeron 100 shows problems at welds, mainly caused by unbalanced microstructure as a result of precipitation of sigma phase.

When oil or gas has been extracted, different products may be manufactured, such as e.g. fuel for cars or aircrafts, raw material for the production of plastics etc. This involves heating and heat transport of natural parts in the refining process. The heating and cooling of medium are other components, which by using lead to further problems with corrosion. During the refining process the products will be transported in pipeline systems and will be desalinated. Then it will be distillated in order to decompose it into its components and then being cooled down in overhead condensers. The cooling will often be carried out with the help of seawater or other chloride-containing water or air. After distillation the fractions will be further refined by removal of H₂S, CO₂ and other impurities, even those were added during the process. At every process step the fluids are heated, processed and cooled. Recently, tubes made from different steel grades are used for these applications, but showing to be a more or less suitable for use in these applications, where they are subjected to very high corrosion from as well as the process fluids side as from the outside.

### SUMMARY OF THE INVENTION

It is therefore an object of the present invention to provide a duplex stainless steel alloy, which shows high corrosion resistance in combination with improved mechanical properties and which is most appropriate for use in environments where a high resistance to general corrosion and localized corrosion and erosion corrosion is required, at the same time as it shows mechanical properties which lead to extended life time of components in applications as oil refining and hydro metallurgical processes.

The material according to the present invention shows for its high alloying content extraordinarily workability, particularly hot workability and shall thereby being very suitable for use for the production of e.g. bars, tubes, such as welded and seamless tubes, plate, strip, wire, welding wire, constructive parts, such as e.g. flanges and couplings.

According to the present invention, these objects are fulfilled with duplex stainless steel alloys, which contain (in weight-%) up to 0,03% C, up to 0,5% Si, 24,0-30,0% Cr, 4,9-10,0% Ni, 3,0-5,0% Mo, 0,28-0,5% N, 0-3,0% Mn, 0-0,0030% B, up to 0,010% S, 0-0,030% Al, 0-0,010% Ca. 0-3,0% W, 0-2,0% Cu, 0,5-3,5% Co, 0-0,3% Ru, balance Fe and inevitable impurities and which shows a content of ferrite in the range of 40 to 65 volume-%. The PRE- or PREW-value for both ferrite- and austenite phase is higher than 45 and PRE or PREW-value for the total composition of the alloy is higher than 46. Also, the ratio between PRE or PREW-value for austenite phase and PRE or PREW value for the ferrite phase lies between 0,90 and 1,15.

### SHORT DESCRIPTION OF THE DRAWINGS

Figure 1 shows CPT-values from tests of the test heats in the modified ASTM G48C test in "Green Death"-solution compared with the duplex steels SAF2507, SAF 2906 as well as that high alloyed austenitic steel 654SMO.
Figure 2 shows CPT-values attained with the assistance of the modified ASTM G48C test in " Green Death"-solution for the test heats compared with the duplex steel SAF2507 as well as the austenitic steel 654SMO.
Figure 3 shows average amount for corrosion in mm/year in 2%HCl at a temperature of 75°C.
Figure 4 shows scores from hot ductility testing for most of the heats.

### DETAILED DESCRIPTION OF THE INVENTION

A systematic development work has surprisingly shown that one by means of a well-balanced combination of the elements Cr, Mo, Ni, N, Mn and Co can obtain optimal dispensation of the elements in the ferrite and austenite, which enables a very corrosion resistant material only with an insignificant amount of sigma phase in the material. The material even obtains good workability, which enables extrusion to seamless tubes. It shows that with the purpose to obtain a combination of high corrosion resistance in connection with good structural stability as is required a much narrow combination of alloying elements in the material is required. The alloy according to the invention contains (in weight-%):

| | |
|---|---|
| C | max 0,03°t° |
| Si | max 0,5% |
| Mn | 0-3,0% |
| Cr | 24,0 - 30,0% |
| Ni | 4,9 -10,0% |
| Mo | 3,0 - 5,0% |
| N | 0,28 - 0,5% |
| B | 0-0,0030% |
| S | max 0,010% |
| Co | 0,5-3,5% |
| W | 0-3,0% |
| Cu | 0-2,0% |
| Ru | 0-0,3% |
| Al | 0-0,03% |
| Ca | 0-0,010% |

balance Fe and normal occurring impurities. The content of ferrite is 40-65 volume-%, the PRE- or PREW-value for both ferrite- and austenite phase is higher than 45, the PRE or PREW-value for the total composition of the alloy is higher than 46, and the ratio between PRE or PREW-value for austenite phase and PRE or PREW-value for the ferrite phase lies between 0,90 and 1,15.

Carbon (C) has limited solubility in both ferrite and austenite. The limited solubility implies a risk of precipitation of chromium carbides and the content should therefore not exceed 0,03 weight-%, preferably not exceed 0,02 weight-%.

Silicon (Si) is utilized as desoxidation agent in the steel production as well as it increases the flowability during production and welding. However, too high contents of Si lead to precipitation of unwanted intermetallic phase, wherefore the content is limited to max 0,5 weight-%, preferably max 0,3 weight-%.

Manganese (Mn) is added in order to increase the N-solubility in the material. However, it has shown that Mn only has a limited influence on the N-solubility in the type of alloy in question. Instead there are found other elements with higher influence on the solubility. Besides, Mn in combination with high contents of sulfur can give rise to formation of manganese sulfides, which act as initiation-points for pitting corrosion. The content of Mn should therefore be limited to between 0-3,0 weight-%, preferably 0,5-1,2 weight-%.

Chromium (Cr) is a much active element in order to improve the resistance to a majority of corrosion types. Furthermore, a high content of chromium implies that one gets a very good N-solubility, in the material. Thus, it is desirable to keep the Cr-content as high as possible in order to improve the corrosion resistance. For very good amounts of corrosion resistance the content of chromium should be at least 24,0 weight-%, preferably 27,0 -29,0 weight-%-However, high contents of Cr increase the risk for intermetallic precipitations, for what reason the content of chromium must be limited up to max 30,0 weight-%.

Nickel (Ni) is used as austenite stabilizing element and is added in suitable contents in order to obtain the desired content of ferrite. In order to obtain the desired relationship between the austenitic and the ferritic phase with between 40-65 volume-% ferrite, an addition of between 4,9-10,0 weight-% nickel, preferably 4,9-8,0 weight-%, is required.

Molybdenum (Mo) is an active element, which improves the resistance to corrosion in chloride environments as well as preferably in reducing acids. A too high Mo-content in combination with that the Cr-contents are high, implies that the risk for intermetallic precipitations increases. The Mo-content in the present invention should lie in the range of 3,0-5,0 weight-%, preferably 3,6-4,7 weight-%, in particular 4,0-4,3 weight-%.

Nitrogen (N) is a very active element, which increases the corrosion resistance, the structural stability as well as the strength of the material. Further, a high N-content improves the recovering of the austenite after welding, which gives good properties within the welded joint. In order to obtain a good effect of N, at least 0,28 weight-% N should be added. At high contents of N the risk for precipitation of chromium nitrides increases, especially when simultaneously the chromium content is high. Further, a high N-content implies that the risk for porosity increases because of the exceeded solubility of N in the smelt For these reasons the N-content should be limited to max 0,5 weight-%, preferably >0,35 - 0,45 weight-% N is added.

Boron (B) is added in order to increase the hot workability of the material. At a too high content of Boron the weldability as well as the corrosion resistance could deteriorate. Therefore, the content of boron should be limited to 0,0030 weight-%.

Sulfur (S) influences the corrosion resistance negatively by forming soluble sulfides- Further, the hot workability deteriorates, for what reason the content of sulfur is limited to max 0,010 weight %.

Cobalt (Co) is added in order to improve foremost the structural stability as well as the corrosion resistance- Co is an austenite-stabilizing element. In order to obtain effect should at least 0,5 weight-%, preferably at least 1,5 weight-% be added. Because cobalt is a relatively expensive element, the addition of cobalt is therefore limited to max 3,5 weight-%.

Tungsten increases the resistance to pitting- and crevice corrosion. But the addition of too high contents of tungsten in combination with that the Cr-contents as well as Mo-contents are high, means that the risk for intermetallic precipitations increases. The W-content in the present invention should lie in the range of 0-3,0 weight-%, preferably between 0,5 and 1,8 weight-%.

Copper is added in order to improve the general corrosion resistance in acid environments such as sulfuric acid. At the same time Cu influences the structural stability. However, high contents of Cu imply that the solid solubility will be exceeded. Therefore the Cu-content should be limited to max 2,0 weight-%, preferably between 0,5 and 1,5 weight-%.

Ruthenium (Ru) is added in order to increase the corrosion resistance. Because ruthenium is a very expensive element, the content should be limited to max 0,3 weight-%, preferably more than 0 and up to 0,1 weight-%.

Aluminum (Al) and Calcium (Ca) are used as desoxidation agents at the steel production. The content of Al should be limited to max 0,03 weight-% in order to limit the forming of nitrides. Ca has a favorable effect on the hot ductility. However, the Ca-content should be limited to 0,010 weight-% in order to avoid an unwanted amount of slag.

The content of ferrite is important in order to obtain good mechanical properties and corrosion properties as well as good weldability. From a corrosion point of view and a point of view of weldability a content of ferrite between 40-65% is desirable in order to obtain good properties. Further, high contents of ferrite imply that the impact strength at low temperatures as well as the resistance to hydrogen-induced brittleness risks deteriorating. The content of ferrite is therefore 40-65 volume-%, preferably 42-60 volume-%, in particular 45-55 volume-%.

### DESCRIPTION OF PREFERED EMBODIEMENTS

In the examples below the composition of a number of test heats is presented, which illustrate the effect of different alloying elements on the properties. Heat 605182 represents a reference composition and is consequently not a part of the field of this invention. Neither shall the remaining heats be considered limiting the invention, without only specifying examples of heats, which illustrate the invention according to the claims.
The specified PRE-numbers or -values consider always amounts calculated according to the PREW-formula, even though this is not explicitly mentioned.

### EXAMPLE 1

The test heats according to this example were produced by casting of 170kg ingots in the laboratory, which were hot forged to round bars. Those were hot extruded to bars (round bars as well as flat bars), where test material was taken out from the round bars. Furthermore, the flat bars were annealed before cold rolling took place, thereafter further test material was taken out. From a material engineering point of view, the process can be considered being representative for the preparation in bigger scale, for example for the production of seamless tubes by the extrusion method, followed by cold rolling. Table 1 shows the composition of the first batch of test heats.

**Table 1. Composition of test heats, weight-%.**

| C | Mn | Cr | Ni | Mo | W | Co | N |
|---|---|---|---|---|---|---|---|
| 605193 | 1,03 | 27,90 | 8,80 | 4,00 | 0,01 | 0,02 | 0,36 |
| 605195 | 0,97 | 27,90 | 9,80 | 4,00 | 0,01 | 0,97 | 0,48 |
| 605197 | 1,07 | 28,40 | 8,00 | 4,00 | 1,00 | 1,01 | 0,44 |
| 605178 | 0,91 | 27,94 | 7,26 | 4,01 | 0,99 | 0,10 | 0,44 |
| 605183 | 1,02 | 28,71 | 6,49 | 4,03 | 0,01 | 1,00 | 0,28 |
| 605184 | 0,99 | 28,09 | 7,83 | 4,01 | 0,01 | 0,03 | 0,44 |
| 605187 | 2,94 | 27,74 | 4,93 | 3,98 | 0,01 | 0,98 | 0,44 |
| 605153 | 2,78 | 27,85 | 6,93 | 4,03 | 1,01 | 0,02 | 0,34 |
| 605182 | 0,17 | 23,48 | 7,88 | 5,75 | 0,01 | 0,05 | 0,26 |

In purpose to investigate the structural stability samples from every heat were annealed at 900-1150°C with steps of 50°C as well as they were quenched in air, respective water. At the lowest temperatures intermetallic phase was formed. The lowest temperature, where the amount of intermetallic phase became insignificant, was determined with the help of studies in light optical microscope. New samples from respective heat were annealed afterwards at said temperature during five minutes, thereafter the samples were cooled down with the constant cooling rate of -140°c/min to room temperature. Subsequently, the area fraction of sigma phase in the materials was determined with digital scanning of the pictures with back-scattering electrons in a scanning electron microscope. The results appear from Table 2.

Tₘₐₓ sigma was calculated with Thermo-Calc (TC version N thermodynamic database for steel TCFE99) based on characteristic amounts for all specified elements in the different variations. Tₘₐₓ sigma is the dissolving temperature for the sigma phase, where high dissolving temperatures indicate lower structural stability.

**Table 2.**

| Heat | Heat treatment | Amount σ [vol-%] | Tmax σ |
|---|---|---|---|
| 605193 | 1100°C, 5min | 7,5% | 1016 |
| 605195 | 1150°C, 5min | 32% | 1047 |
| 605197 | 1100°C, 5min | 18% | 1061 |
| 605178 | 1100°C, 5min | 14% | 1038 |
| 605183 | 1050°C, 5min | 0,4% | 997 |
| 605184 | 1100°C, 5min | 0,4% | 999 |
| 605187 | 1050°C, 5min | 0,3% | 962 |
| 605153 | 1100°C, 5min | 3,5% | 1032 |
| 605182 | 1100°C, 5min | 2,0% | 1028 |

The purpose of this investigation is to be able to rank the material with regard to the structural stability, i.e. this is not the real content of sigma phase in the samples, which were heat treated and quenched before for example the corrosion testing. One can see that Tₘₐₓ sigma, which was calculated with Thermo-Calc does not directly coincide with the measured amounts of sigma phase, however it is distinct that the test heats with the lowest calculated Tₘₐₓ sigma contain the lowest amount sigma phase during this investigation.

The pitting corrosion properties of all heats were tested for ranking in the so-called "Green Death"-solution; which consists of 1% FeCl₃, 1%CuCl₂, 11 % H₂SO₄, 1,2% HCl. The test procedure is equivalent to the pitting corrosion testing according to ASTM G48C; however, it will be carried out in the more aggressive "Green Death"-solution. Further, some of the heats were tested according to ASTMG48C (2 tests per heat). Also the electrochemical testing in 3%NaCl (6 tests per heat) was carried out. The results in form of the Critical Pitting Temperature (CPT) from all tests appear from Table 3, such as the PREW-number (Cr+3,3(Mo+0,5W)+16N) for the total composition of the alloy as well as for austenite and ferrite. The indexing alpha refers to the ferrite and gamma refers to the austenite.

**Table 3.**

| Heat Heat | PRE α | PRE γ | PRE *γl* PRE α | PRE | CPT °C Modified ASTM G48C Green death | CPT °C ASTM G48 C 6% FeCl₃ | CPT °C 3% NaCI |
|---|---|---|---|---|---|---|---|
| 605193 | 51,3 | 49,0 | 0,9552 | 46,9 | 90190 | | 64 |
| 605195 | 51,5 | 48,9 | 0,9495 | 48,7 | 90/90 | | 95 |
| 605197 | 53,3 | 53,7 | 1,0075 | 50.3 | 90/90 | >95 | >95 |
| 605178 | 50,T | 52,5 | 1.0355 | 49,8 | 75/80 | | 94 |
| 605183 | 48.9 | 48,9 | 1,0000 | 46,5 | 85/85 | 90 | 93 |
| 605184 | 48,9 | 51,7 | 1,0573 | 48,3 | 80180 | | 72 |
| 605187 | 48,0 | 54,4 | 1,1333 | 48,0 | 70/75 | | 77 |
| 605182 | 54,4 | 46,2. | 0,8493 | 46,6 | 75/70 | 85 | 62 |
| 654SMO | | | | | 90/85 | | |
| SAF2507 | | | | | 70/70 | | |
| SAF2609 | | | | | 60/50 | | |
| 605153 | 49,6 | 51,9 | 1,0464 | 48,3 | 8085 | 85 | 90 |

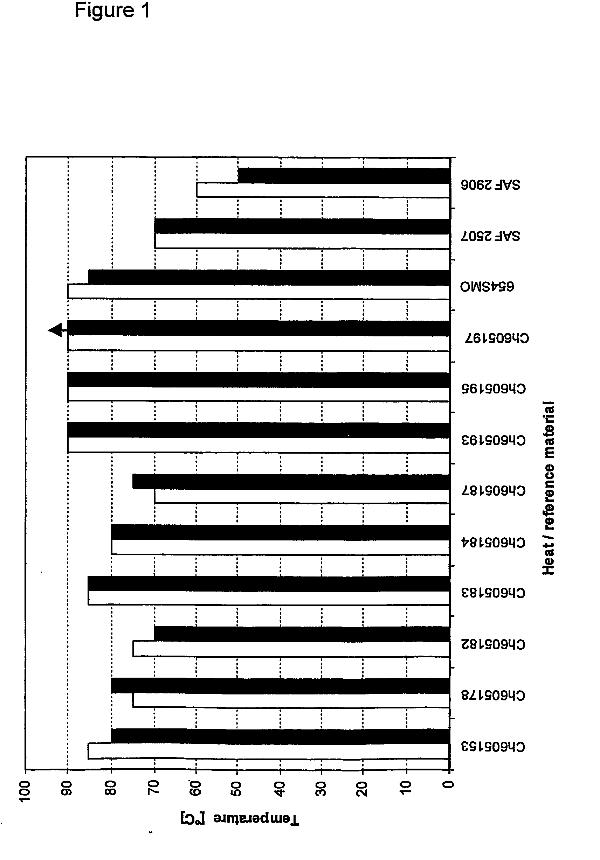

It is established that there exists a linear ratio between the lowest PRE-number in the austenite or ferrite and the CPT-value in the duplex steel, but the results in Table 3 show that the PRE-number not solely explains the CPT-values. In Figure 1 the CPT-values from test in the modified ASTM G48C test are shown diagrammatically. The duplex steels SAF2507, SAF2906 as well as the high alloyed austenitic steel 654SMO are included as reference. It is distinct from these results that all test materials show better CPT in the modified ASTM G48C than SAF2507 as well as SAF2906. Furthermore some of the test materials show CPT results in the modified ASTM G48C at the same level as or in excess of 654SMO. The test heat 605183, alloyed with cobalt shows good structural stability at a controlled cooling rate of (-140°C/min) in spite that it contains high contents of chromium as well as of molybdenum, shows better results than SAF2507 and SAF2906. It appears from this investigation that a high PRE does not solely explain the CPT values, without the relationship PRE austenit/PRE ferrite is of extreme weight for the properties of the higher alloyed duplex steels, and a very narrow and exact leveling between the alloying elements is required in order to obtain this optimum ratio, which lies between 0,9-1,15; preferably 0,9-1,05 and simultaneously obtain PRE values of above 46. The ratio PRE austenit/PRE ferrite against CPT in the modified ASTM G48C test for the test heats is given in Table 3.

The strength at room temperature (RT), 100°C and 200°C and the impact strength at room temperature (RT) have been determined for all heats and are shown as average amount for three tests.

Tensile test specimen (DR-5C50) were manufactured from extruded bars, Ø 20mm, which were heat treated at temperatures according to Table 2 in 20 minutes followed by cooling down in either air or water (605195, 605197, 605184). The results of the tests are presented in Table 4 and 5. The results of the tensile test show that the contents of chromium, nitrogen and tungsten strongly influence the impact strength of the material. Besides 605153, all heats fulfill the requirement of a 25% elongation at tensile testing at room temperature (RT).

**Table 4. Impact strength**

| Heat | Temperature | R_{p0,2} | R_{p1,0} | Rₘ | A5 | Z |
|---|---|---|---|---|---|---|
| | | (MPa) | (MPa) | (MPa) | (%) | (%) |
| 605193 | RT | 652 | 791 | 916 | 29,7 | 38 |
| | 100°C | 513 | 646 | 818 | 30,4 | 36 |
| | 200°C | 511 | 583 | 756 | 29,8 | 36 |
| 605195 | RT | 671 | 773 | 910 | 38,0 | 66 |
| | 100°C | 563 | 637 | 825 | 39,3 | 68 |
| | 200°C | 504 | 563 | 769 | 38,1 | 64 |
| 605197 | RT | 701 | 799 | 939 | 38,4 | 66 |
| | 100°C | 564 | 652 | 844 | 40,7 | 69 |
| | 200°C | 502 | 577 | 802 | 35,0 | 65 |
| 605178 | RT | 712 | 828 | 925 | 27,0 | 37 |
| | 100°C | 596 | 677 | 829 | 31,9 | 45 |
| | 200°C | 535 | 608 | 763 | 27,1 | 36 |
| 605183 | RT | 677 | 775 | 882 | 32,4 | 67 |
| | 100°C | 560 | 642 | 788 | 33,0 | 59 |
| | 200°C | 499 | 578 | 737 | 29,9 | 52 |
| 605184 | RT | 702 | 793 | 915 | 32,5 | 60 |
| | 100°C | 569 | 657 | 821 | 34,5 | 61 |
| | 200°C | 526 | 581 | 774 | 31,6 | 56 |
| 605187 | RT | 679 | 777 | 893 | 35.7 | 61 |
| | 100°C | 513 | 628 | 799 | 38.9 | 64 |
| | 200°C | 505 | 558 | 743 | 35,8 | 58 |
| 605153 | RT | 715 | 845 | 917 | 20,7 | 24 |
| | 100°C | 572 | 692 | 817 | 29,3 | 27 |
| | 200°C | 532 | 611 | 749 | 23,7 | 31 |
| 605182 | RT | 627 | 754 | 903 | 28,4 | 43 |
| | 100°C | 493 | 621 | 802 | 31.8 | 42 |

**Table 5. Impact Strength**

| Heat | Annealing [°C/min] | Cooling | Impact strength [J] | Annealing [°C/min] | Cooling | Impact strength [J] |
|---|---|---|---|---|---|---|
| 605193 | 1100/20 | Air | 35 | 1100/20 | Water | 242 |
| 605195 | 1150/20 | Water | 223 | | | |
| 605197 | 1100/20 | Water | 254 | 1130/20 | Water | 259 |
| 605178 | 1100/20 | Air | 62 | 1100/20 | Water | 234 |
| 605183 | 1050/20 | Air | 79 | 1050/20 | Water | 244 |
| 605184 | 1100/20 | Water | 81 | 1100/20 | Air | 78 |
| 605187 | 1050/20 | Air | 51 | 1100/20 | Water | 95 |
| 605153 | 1100/20 | Air | 50 | 1100/20 | Water | 246 |
| 605'182 | 1100/20 | Air | 22 | 1100/20 | Water | 324 |

This investigation shows very distinct that water quenching is certainly necessary in order to obtain the best structure and consequently good values for the impact strength. The requirement is '100J at test at room temperature and all heats pass this, except heat 605184 and 605187, where certainly the latter lies very near the requirement.

Table 6 shows the results from the Tungsten-Inert-Gas remelting test (henceforth-abbreviated TIG), where the heats 605193, 605183, 605184 as well as 605253 show a good structure in the heat affected zone (Heat Affected Zone, henceforth-abbreviated HAZ). The Ti- containing heats show Tin in HAZ. A too high chromium- and nitrogen content results in precipitation of Cr₂ N, which shall be avoided because it deteriorates the properties of the material.

**Table 6.**

| Heat | Precipitations Protective gas Ar (99,99%) |
|---|---|
| 605193 | HAZ: OK |
| 605195 | HAZ: Large amounts of TIN and σ-phase |
| 605197 | HAZ: Small amounts of Cr₂N in 6-grains, but not much |
| 605178 | HAZ: Cr₂N in δ-grains, otherwise OK |
| 605183 | HAZ: OK |
| 605184 | HAZ: OK |
| 605187 | HAZ: Cr₂N quite near the meltingbond, no precipitations farther out |
| 605153 | HAZ OK |
| 605182 | HAZ: TiN and decorated grainboundaries δ/δ |

### EXAMPLE 2

In the below-mentioned example the composition of a further number of test heats produced with the purpose to find the optimum composition is given. These heats are modified starting out from the properties of the heats with good structural stability as well as high corrosion resistance, from the results, which were shown in example 1. All heats in Table 7 are included in the composition according to the present invention, where heats 1-8 are included into a statistical test model, while the heats e to n are additional test alloys within the scope of this invention.

A number of test heats were produced by casting of 270kg ingots, which were hot forged to round bars. Those were extruded to bars, wherefrom test samples were taken. Afterwards the bar was annealed before cold rolling to flat bars was executed, after that further test material was taken out. Table 7 shows the composition for these test heats.

**Table 7.**

| | Heat | Mn | Cr | Ni | Mo | W | Co | Cu | Ru | B | N |
|---|---|---|---|---|---|---|---|---|---|---|---|
| 1 | 605258 | 1,1 | 29,0 | 6,5 | 4,23 | | 1,5 | | | 0,0018 | 0,46 |
| 2 | 605249 | 1,0 | 28,8 | 7,0 | 4,23 | | 1,5 | | | 0,0026 | 0,38 |
| 3 | 605259 | 1,1 | 29,0 | 6,8 | 4,23 | | 0,6 | | | 0,0019 | 0,45 |
| 4 | 605260 | 1,1 | 27,5 | 5,9 | 4,22 | | 1,5 | | | 0,0020 | 0,44 |
| 5 | 605250 | 1,1 | 28,8 | 7,6 | 4,24 | | 0,6 | | | 0,0019 | 0,40 |
| 6 | 605251 | 1,0 | 28,1 | 6,5 | 4,24 | | 1,5 | | | 0,0021 | 0,38 |
| 7 | 605261 | 1,0 | 27,8 | 6,1 | 4,22 | | 0,6 | | | 0,0021 | 0,43 |
| 8 | 605252 | 1,1 | 28,4 | 6,9 | 4,23 | | 0,5 | | | 0,0018 | 0,37 |
| e | 605254 | 1,1 | 26,9 | 6,5 | 4,8 | | 1,0 | | | 0,0021 | 0,38 |
| f | 605255 | 1,0 | 28,6 | 6,5 | 4,0 | | 3,0 | | | 0,0020 | 0,31 |
| g | 605262 | 2,7 | 27,6 | 6,9 | 3,9 | 1.0 | 1,0 | | | 0,0019 | 0,36 |
| h | 605263 | 1,0 | 28,7 | 6,6 | 4,0 | 1,0 | 1,0 | | | 0,0020 | 0,40 |
| in | 605253 | 1,0 | 28,8 | 7,0 | 4,16 | | 1,5 | | | 0,0019 | 0,37 |
| j | 605266 | 1,1 | 30,0 | 7,1 | 4,02 | | | | | 0,0018 | 0,38 |
| k | 605269 | 1,0 | 28,5 | 7,0 | 3,97 | 1,0 | 1,0 | | | 0,0020 | 0,45 |
| l | 605268 | 1,1 | 28,2 | 6,6 | 4,0 | 1,0 | 1,0 | 1,0 | | 0,0021 | 0,43 |
| m | 605270 | 1,0 | 28,8 | 7,0 | 4,2 | | 1,5 | | 0,1 | 0,0021 | 0,41 |
| n | 605267 | 1,1 | 29,3 | 6,5 | 4,23 | | | 1,5 | | 0,0019 | 0,38 |

**Table 8. Thermo-Calc**

| Variant | α-formula empirical | α T-C | PRE total | PRE α | PRE γ | Tₘₐₓ sigma | Tmax Cr₂N |
|---|---|---|---|---|---|---|---|
| 1 | 46 | 50 | 50,2 | 47,8 | 50,5 | 1006 | 1123 |
| 2 | 52 | 50 | 49.1 | 48,4 | 49,8 | 1019 | 1084 |
| 3 | 45 | 50 | 50,2 | 47,9 | 52.6 | 1007 | 1097 |
| 4 | 46 | 50 | 49.2 | 46,5 | 49,8 | 986 | 1121 |
| 5 | 47 | 50 | 49,1 | 48.5 | 49,7 | 1028 | 1038 |
| 6 | 52 | 50 | 48,1 | 47,1 | 49,2 | 998 | 1086 |
| 7 | 44 | 50 | 49,2 | 46,6 | 52,0 | 985 | 1081 |
| 8 | 46 | 50 | 48,1 | 47,2 | 49,1 | 100 $ | 1044 |
| e | 46 | 53 | 49,3 | 48,4 | 49.5 | 1010 | 1099 |
| f | 65 | 52 | 46,7 | 47,2 | 46,1 | 1008 | 1090 |
| g | 48 | 51 | 48,4 | 48,4 | 48,3 | 1039 | 979 |
| h | 50 | 53 | 50,0 | 48,4 | 51,7 | 1035 | 1087 |
| i | 52 | 50 | 49,1 | 48,4 | 49,8 | 1019 | 1084 |

Thermo-Calc-values according to Table 8 (T-C version N thermodynamic database for steel TCFE99) are based on characteristic amounts for all specified elements in the different variations. The PRE-number for the ferrite and austenite is based on their equilibrium composition at 1100°C. Tₘₐₓ sigma is the dissolving temperature for the sigma phase, where high dissolving temperatures indicate lower structural stability.

The distribution of the alloying elements in the ferrite- and austenite phase was examined with microprobe analysis, the results appear from Table 9.

**Table 9.**

| Heat | Phase | Cr | Mn | Ni | Mo | W | Co | Cu | N |
|---|---|---|---|---|---|---|---|---|---|
| 605258 | Ferrite | 29,8 | 1,3 | 4,8 | 5,0 | | 1.4 | | 0,11 |
| | Austenite | 28,3 | 1,4 | 7,3 | 3,4 | | 1,5 | | 0,60 |
| 605249 | Ferrite | 29,8 | 1,1 | 5,4 | 5,1 | | 1,3 | | 0,10 |
| | Austenite | 27,3 | 1,2 | 7,9 | 3,3 | | 1,6 | | 0,53 |
| 605259 | Ferrite | 29,7 | 1,3 | 5,3 | 5,3 | | 0,5 | | 0,10 |
| | Austenite | 28,1 | 1,4 | 7,8 | 3,3 | | 0,58 | | 0,59 |
| 605260 | Ferrite | 28,4 | 1,3 | 4,4 | 5,0 | | 1,4 | | 0,08 |
| | Austenite | 26,5 | 1,4 | 6,3 | 3,6 | | 1,5 | | 0,54 |
| 605250 | Ferrite | 30,1 | 1,3 | 5,6 | 5,1 | | 0,46 | | 0,07 |
| | Austenite | 27,3 | 1,4 | 8,8 | 3,4 | | 0,53 | | 0,52 |
| 605251 | Ferrite | 29,6 | 1,2 | 5,0 | 5,2 | | 1,3 | | 0,08 |
| | Austenite | 26,9 | 1,3 | 7,6 | 3,5 | | 1,5 | | 0,53 |
| 605261 | Ferrite | 28,0 | 1,2 | 4,5 | 4,9 | | 0,45 | | 0,07 |
| | Austenite | 26,5 | 1,4 | 6,9 | 3,3 | | 0,56 | | 0,56 |
| 605252 | Ferrite | 29,6 | 1,3 | 5,3 | 5,2 | | 0,42 | | 0,09 |
| | Austenite | 27,1 | 1,4 | 8,2 | 3,3 | | 0,51 | | 0,48 |
| 605254 | Ferrite | 28,1 | 1,3 | 4,9 | 5,8 | | 0,89 | | 0,08 |
| | Austenite | 26,0 | 1,4 | 7,6 | 3,8 | | 1,0 | | 0,48 |
| 605255 | Ferrite | 30,1 | 1,3 | 5,0 | 4,7 | | 2,7 | | 0,08 |
| | Austenite | 27,0 | 1,3 | 7,7 | 3,0 | | 3,3 | | 0,45 |
| 605262 | Ferrite | 28,8 | 3,0 | 5,3 | 4,8 | 1,4 | 0,9 | | 0,08 |
| | Austenite | 26,3 | 3,2 | 8,1 | 3,0 | 0,85 | 1,1 | | 0,46 |
| 605263 | Ferrite | 29,7 | 1,3 | 5.1 | 5.1 | 1,3 | 0,91 | | 0,07 |
| | Austenite | 27,8 | 1,4 | 7,7 | 3,2 | 0,79 | 1,1 | | 0,51 |
| 605253 | Ferrite | 30,2 | 1,3 | 5,4 | 5,0 | | 1,3 | | 0,09 |
| | Austenite | 27,5 | 1,4 | 8,4 | 3,1 | | 1,5 | | 0,48 |
| 605266 | Ferrite | 31,0 | 1,4 | 5,7 | 4,8 | | | | 0,09 |
| | Austenite | 29,0 | 1,5 | 8,4 | 3,1 | | | | 0,52 |
| 605269 | Ferrite | 28,7 | 1,3 | 5,2 | 5,1 | 1,4 | 0,9 | | 0,11 |
| | Austenite | 26,6 | 1,4 | 7,8 | 3,2 | 0,87 | 1,1 | | 0,52 |
| 605268 | Ferrite | 29,1 | 1,3 | 5,0 | 4,7 | 1,3 | 0,91 | 0,84 | 0,12 |
| | Austenite | 26,7 | 1,4 | 7,5 | 3,2 | 0,97 | 1,0 | 1,2 | 0,51 |
| 605270 | Ferrite | 30,2 | 1,2 | 5,3 | 5,0 | | 1,3 | | 0,11 |
| | Austenite | 27,7 | 1,3 | 8,0 | 3,2 | | 1,4 | | 0,47 |
| 605267 | Ferrite | 30,1 | 1,3 | 5,1 | 4,9 | | | 1,3 | 0,08 |
| | Austenite | 27,8 | 1,4 | 7,6 | 3,1 | | | 1,8 | 0,46 |

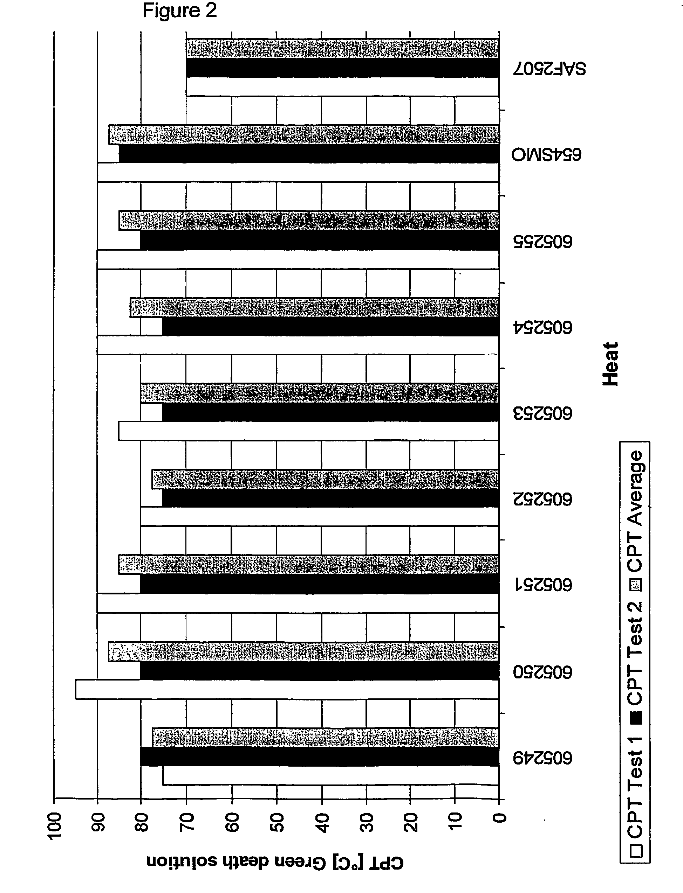

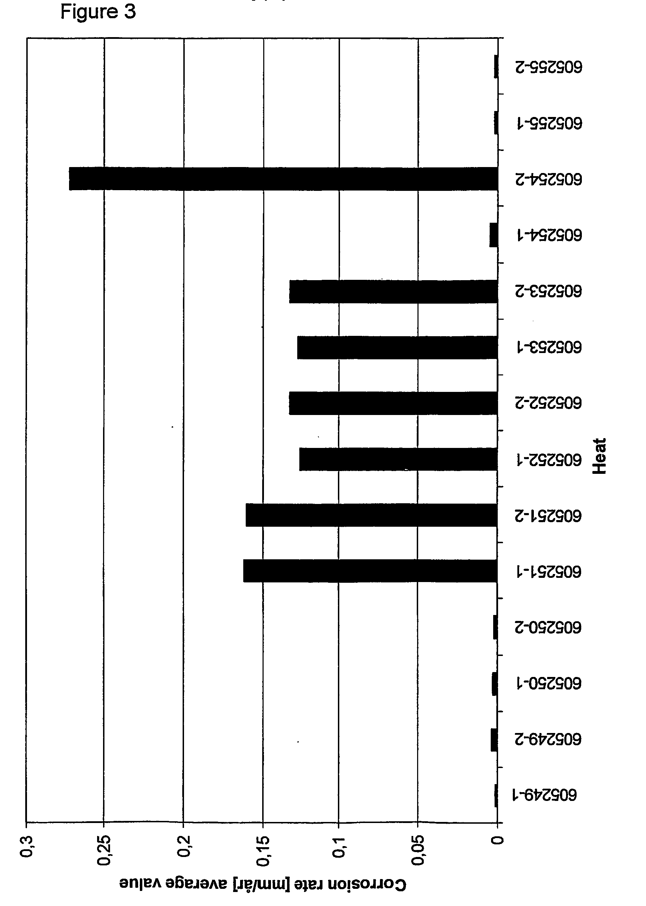

The pitting corrosion properties of all heats have been tested in the "Green Death"- solution (1 %FeCl₃, 1 %CuCl₂, 11 % H₂SO₄, 1,2% HCl) for ranking. The test procedures are the same as pitting corrosion testing according to ASTM G48C, but the testing will be executed in a more aggressive solution than 6%FeCl₃, the so-called "Green Death"-solution. Also the general corrosion testing in 2%HCI (2 tests per heat) was executed for ranking before the dew point testing. The results from all tests appear from Table 10, Figure 2 and Figure 3 All tested heats perform better than SAF2507 in "Green Death"-solution. All heats lie within the identified range of 0,9-1,15; preferably 0,9-1,05 applicable for the ratio PRE austenit/PRE ferrite at the same time as PRE in both austenite and ferrite is in excess of 44 and for most of the heats even considerable in excess of 44. Some of the heats attain even the limit of total PRE 50- It is very interesting to note that heat 605251, alloyed with 1,5 weight-% cobalt, performs almost equivalent with heat 605250, alloyed with 0,6 weight-% cobalt, in "Green Death"-solution in spite of the lower chromium content in heat 605251. It is particularly surprising and interesting because heat 605251 has a PRE-number of ca. 48, which is in excess of some of today's commercial superduplex alloys simultaneously as the Tₘₐₓ sigma-value below 1010°C indicates a good structural stability based on the values in Table 2 in Example 1.

In Table 10 is indicated even PREW-number (%Cr+3,3%(Mo+0,5%W)+16%N) for the total composition of the alloy and PRE in austenite as well as in the ferrite (rounded off) based on composition of the phases as measured with micro probe. Content of ferrite was measured after heat-treating at 1100°C followed by water quenching.

**Table 10**

| Heat | α-halt | PREW Total | PRE α | PRE γ | PRE-γ/ PREα | CPT °C Green death |
|---|---|---|---|---|---|---|
| 605258 | 48,2 | 50,3 | 48,1 | 49,1 | 1,021 | |
| 605249 | 59,8 | 48,9 | 48,3 | 46,6 | 0,967 | 75/80 |
| 605259 | 49,2 | 50,2 | 48,8 | 48,4 | 0,991 | |
| 605260 | 53,4 | 48,5 | 46,1 | 47,0 | 1,019 | |
| 605250 | 53,6 | 49,2 | 48,1 | 46,8 | 0,974 | **95/80** |
| 605251 | 54,2 | 48,2 | 48,1 | 46,9 | 0,976 | **90/80** |
| 605261 | 50,8 | 48,6 | 45,2 | 46,3 | 1,024 | |
| 605252 | 56,6 | 48,2 | 48,2 | 45,6 | 0,946 | 80/75 |
| 605254 | 53,2 | 48,8 | 48,5 | 46,2 | 0,953 | 90/75 |
| 605255 | 57,4 | 46,9 | 46,9 | 44,1 | 0,940 | **90/80** |
| 605262 | 57,2 | 47,9 | 48,3 | 45,0 | 0,931 | |
| 605263 | 53,6 | 49,7 | 49,8 | 47,8 | 0,959 | |
| 605253 | 52,6 | 48,4 | 48,2 | 45,4 | 0,942 | 85/75 |
| 605266 | 62,6 | 49,4 | 48,3 | 47,6 | 0,986 | |
| 605269 | 52,8 | 50,5 | 49,6 | 46,9 | 0,945 | |
| 605268 | 52,0 | 49,9 | 48,7 | 47,0 | 0,965 | |
| 605270 | 57,0 | 49,2 | 48,5 | 45,7 | 0,944 | |
| 605267 | 59,8 | 49,3 | 47,6 | 45,4 | 0,953 | |

In order to closer examine the structural stability in detail the samples were annealed for 20 minutes at 1080°C, 1100°C and 1150°C, thereafter they were quenched in water. The temperature, where the amount of intermetallic phase became insignificant was determined with help of investigations in a light optical microscope. A comparison of the structure of the heats after annealing at 1080°C followed by water quenching indicates which of the heats are more suspect to contain undesired sigma phase. The results are shown in Table 11. Control of the structure shows that the heats 605249, 605251, 605252, 605253, 605254, 605255, 605259, 605260, 605266 as well as 605267 are free from unwanted sigma phase. Moreover, heat 605249, alloyed with 1,5 weight-% cobalt, is free from sigma phase, while heat 605250, alloyed with 0,6 weight-% cobalt, contains a very small amount of sigma phase. Both heats are alloyed with high contents of chromium, approximately 29,0 weight-% and the molybdenum content of approximately 4,25 weight-%. If one compares the compositions of the heats 605249, 605250, 605251 and 605252 with thought on the content of sigma phase, it is very distinct that the range of composition for that optimum material is very narrow, in this case with regard to the structural stability. It further shows that the heat 605268 contains only sigma phase compared to heat 605263, which contains much sigma phase. What mainly distinguishes these heats from each other is the addition of copper to heat 605268. Heat 605266 and also 605267 are free from sigma phase; despite of a high content of chromium the later heat is alloyed with copper. Further, the heats 605262 and 605263 with addition of 1,0 weight-% tungsten show a structure with much sigma phase, while it is interesting to note that heat 605269, also with 1,0 weight-% tungsten but with higher content of nitrogen than 605262 and 605263 shows a considerable smaller amount of sigma phase. Consequently, a very well leveled balance between the different alloying elements at these high alloying contents is required of for example chromium and molybdenum in order to obtain good structural properties. Table 11 shows the results from the light optical examination after annealing at 1080°C, 20min followed by water quenching. The amount of sigma phase is specified with values from 1 to 5, where 1 represents that no sigma phase was detected in the examination, while 5 represents that a very high content of sigma phase was detected in the examination.

**Table 11**

| **Heat** | **Sigma phase** | **Cr** | **Mo** | **W** | **Co** | **Cu** | **N** | **Ru** |
|---|---|---|---|---|---|---|---|---|
| 605249 | 1 | 28,8 | 4,23 | | 1,5 | | 0,38 | |
| 605250 | 2 | 28,8 | 4,24 | | 0,6 | | 0,40 | |
| 605251 | 1 | 28,1 | 4,24 | | 1,5 | | 0,38 | |
| 605252 | 1 | 28,4 | 4,23 | | 0,5 | | 0,37 | |
| 605253 | 1 | 28,8 | 4,16 | | 1,5 | | 0,37 | |
| 605254 | 1 | 26,9 | 4,80 | | 1,0 | | 0,38 | |
| 605255 | 1 | 28,6 | 4,04 | | 3,0 | | 0,31 | |
| 605258 | 2 | 29,0 | 4,23 | | 1,5 | | 0,46 | |
| 605259 | 1 | 29,0 | 4,23 | | 0,6 | | 0,45 | |
| 605260 | 1 | 27,5 | 4,22 | | 1,5 | | 0,44 | |
| 605261 | 2 | 27,8 | 4,22 | | 0,6 | | 0,43 | |
| 605262 | 4 | 27,6 | 3,93 | 1,0 | 1,0 | | 0,36 | |
| 605263 | 5 | 28,7 | 3,96 | 1,0 | 1,0 | | 0,40 | |
| 605266 | 1 | 30,0 | 4,02 | | | | 0,38 | |
| 605267 | 1 | 29,3 | 4,23 | | | 1,5 | 0,38 | |
| 605268 | 2 | 28,2 | 3,98 | 1,0 | 1,0 | 1,0 | 0,43 | |
| 605269 | 3 | 28,5 | 3,97 | 1,0 | 1,0 | | 0,45 | |
| 605270 | 3 | 28,8 | 4,19 | | 1,5 | | 0,41 | 0,1 |

In Table 12 the results from the impact strength testing of some of the heats are shown. The results are very good, which indicates a good structure after annealing at 1100°C followed by water quenching and the requirement of 100J will be managed with large margin of all tested heats.

**Table 12.**

| Heat | Annealing [°C/min] | Quenching | Impact strength [J] | Impact strength [J] | Impact strength [J] |
|---|---|---|---|---|---|
| 605249 | 1100/20 | Water | >300 | >300 | >300 |
| 605250 | 1100/20 | Water | >300 | >300 | >300 |
| 605251 | 1100/20 | Water | >300 | >300 | >300 |
| 605252 | 1100/20 | Water | >300 | >300 | >300 |
| 605253 | 1100/20 | Water | 258 | 267 | 257 |
| 605254 | 1100/20 | Water | >300 | >300 | >300 |
| 605255 | 1100/20 | Water | >300 | >300 | >300 |

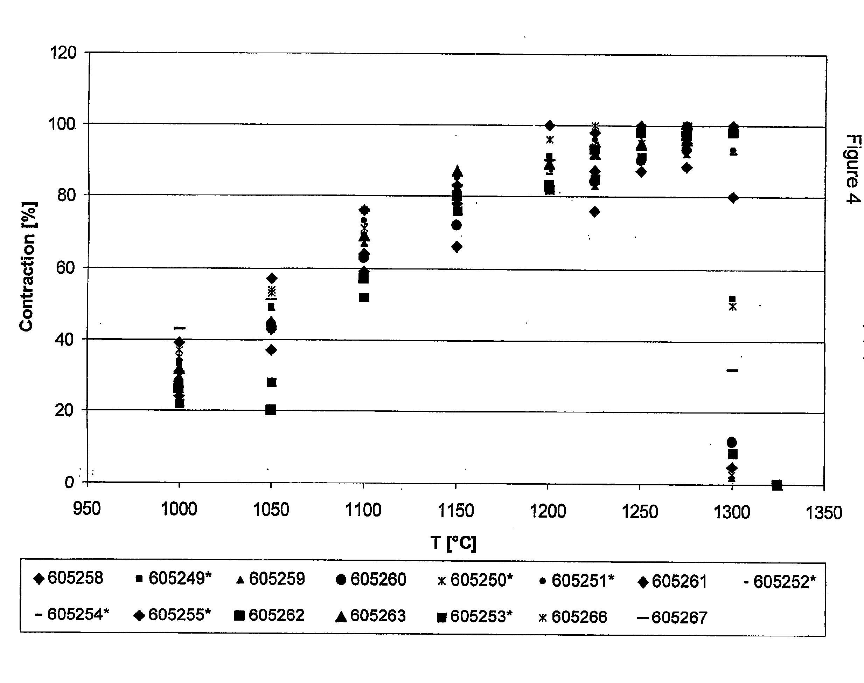

Figure 4 shows the results from the hot ductility testing of the most of the heats. A good workability is of course of vital importance in order to be able to produce the material to product forms such as bars, tubes, such as welded and seamless tubes, plate, strip, wire, welding wire, constructive elements, such as for example flanges and couplings. The heats 605249,605250, 605251, 605252, 605255, 605266 as well as 605267 show somewhat improved hot ductility values.

### Summary of the test results

In order to obtain good corrosion properties, simultaneously as the material shows good structural stability, hot workability and weldability the material should be optimized according to the following:
- PRE-number in ferrite should exceed 45, but preferably be at least 47.
- PRE-number in austenit should exceed 45, but preferably be at least 47.
- PRE-number for the entire alloy should preferably be at least 46.
- Relationship PRE austenitIPRE ferrite should lie in the range of 0,9-1,15; preferably in the range 0,9-1,05.
- The content of ferrite should lie in the range preferably 45-55 volume-%.
- Tₘₐₓ sigma should not exceed 1010°C.
- The content of nitrogen should lie in the range 0,28-0,5 weight-%, preferably in the range 0,35-0,48 weight-%, but preferably 0,38-0,40 weight-%.
- The content of cobalt should lie in the range 0-3,5 weight-%, preferably 1,0-2,0 weight-%, but preferably 1,3-1,7 weight-%.
- In order to ensure the high nitrogen solubility, i.e. if the content of nitrogen is in the range 0,38-0,40 weight-% should at least 29 weight-% Cr be added as well as at least 3,0 weight-% Mo, thus the total content of the elements Cr, Mo and N fulfills said requirements on the PRE-number.

### EXAMPLE 3

The oil refining process is very complex and consists of a lot of steps, where non-hydrocarbons as e.g. inorganic chlorides can cause extensive corrosion problems. Crude oil contains different kinds of salt, among others Na-, Mg and Ca-chlorides. The inorganic MgCl₂ and CaCl₂ are the most critical, because hydrolysis during heating generates hydrochloric acid (HCl). The hydrochloride acid can condense on the materials used in the overhead condensers in the refining part of the refining plant. The forming of HCl could cause serious corrosion problems, especially in combination with the occurrence of solid salts on the surfaces of the materials, which also appears frequently. The corrosion problems in the overhead condensers in the refining plant extend over general corrosion, pitting corrosion to crevice corrosion.

In certain production units it is rather the cooling water than the process fluid that causes the corrosion problems. The chloride content of the cooling water can vary from zero in de-ionized water up to approximately 1,5 % in seawater.

### EXAMPLE 4

During the production of chlorinated hydrocarbon, such as e.g. ethylene dichloride (abbreviated EDC) and vinyl chloride monomer (abbreviated VMC) problems can occur, where condensate of hydrochloric acid, salt forming and chloride containing cooling water give rise to serious attacks on the used constructive material. Also in these plants the corrosion problems mainly in tubes, such as heat exchanger tubes in overhead condensers are especially critical.

### EXAMPLE 5

Hydrometallurgy means production of metals from aqueous solution by leaching, solution reclaiming process, precipitation of metals and refining. Also in these processes a high resistance to local corrosion from chlorides in combination with oxidizing metal ions, which included in the slurry (mixture of the crushed oxide and processing water), and also the resistance to general corrosion from acids, occurring in leaching processes and erosion corrosion.

Examples for such processes are leaching of nickel and cobalt from laterit ore at high temperatures and high pressure, especially under the preheating step before the autoclaves where the acid leaching takes place.

## Claims

1. Use of a ferritic-austenitic duplex stainless steel alloy with high corrosion resistance in combination with good structural stability and a combination of mechanical properties in applications with aggressive environments, said alloy having the following composition, in weight-%:
| | |
|---|---|
| C | max 0,03% |
| Si | max 0,5% |
| Mn | 10 - 3,0% |
| Cr | 24,0 - 30,0% |
| Ni | 4,9 - 10.0% |
| Mo | 3,0 - 5.0% |
| N | 0,28-0,5% |
| B | 0-0,0030% |
| S | max 0,010% |
| Co | 0,5-3,5% |
| W | 0-3,0% |
| Cu | 0-2,0% |
| Ru | 0-0,3% |
| Al | 0-0,03% |
| Ca | 0-0,010% |
and the balance Fe and normal occurring impurities, whereby the content of ferrite is 40-65 volume-%, the PRE- or PREW-value for both ferrite- and austenite phase is higher than 45 and PRE or PREW-value for the total composition of the alloy is higher than 46 and the ratio between PRE or PREW-value for austenite phase and PRE or PREW-value for the ferrite phase lies between 0,90 and 1,15.

2. Use of a ferritic-austenitic duplex stainless steel alloy according to claim 1 in chloride containing environments.

3. Use of a ferritic-austenitic duplex stainless steel alloy according to claim 2 in oil refining processes.

4. Use of a ferritic-austenitic duplex stainless steel alloy according to claim 2 in hydro metallurgical processes.

5. Use of a ferritic-austenitic duplex stainless steel alloy according to any of the preceding claims whereby the content of ferrite is preferably between 42 and 60 volume-%, most preferably between 45 and 55 volume-%.

6. Use of a ferritic-austenitic duplex stainless steel alloy according to any of the preceding claims whereby the ratio between PRE or PREW-value for austenite phase and PRE or PRE1N value for the ferrite phase lies between 0,9 and 1,05.

7. Use of a ferritic-austenitic duplex stainless steel alloy according to the preceding claims for the manufacturing of product forms such as bars, tubes, such as welded and seamless tubes, plate, strip, wire, welding wire, constructive parts, such as for example flanges and couplings.

## Patentansprüche

1. Verwendung einer ferritisch-austenitischen Duplexstahllegierung mit hoher Korrosionsbeständigkeit in Kombination mit guter Gefügestabilität und einer Kombination von mechanischen Eigenschaften in Anwendungen mit aggressiven Umgebungen, wobei die Legierung die folgende Zusammensetzung in Gewichts-% hat:
| | |
|---|---|
| C | max. 0,03% |
| Si | max. 0,5% |
| Mn | 0 - 3,0% |
| Cr | 24,0 - 30,0% |
| Ni | 4,9 - 10,0% |
| Mo | 3,0 - 5,0% |
| N | 0,28 - 0,5% |
| B | 0 - 0,0030% |
| S | max. 0,010% |
| Co | 0,5 - 3,5% |
| W | 0 - 3,0% |
| Cu | 0 - 2,0% |
| Ru | 0 - 0,3% |
| Al | 0 - 0,03% |
| Ca | 0 - 0,010% |
und Rest Fe und normal auftretende Verunreinigungen, wobei der Gehalt an Ferrit 40-65 Volumen-% beträgt, der PRE- oder PREW-Wert für sowohl die Ferrit- als auch die Austenitphase höher als 45 ist und der PRE- oder PREW-Wert für die Gesamtzusammensetzung der Legierung höher als 46 ist und das Verhältnis zwischen dem PRE- oder PREW-Wert für die Austenitphase und dem PRE- oder PREW-Wert für die Ferritphase zwischen 0,90 und 1,15 liegt.

2. Verwendung einer ferritisch-austenitischen Duplexstahllegierung nach Anspruch 1 in chloridhaltigen Umgebungen.

3. Verwendung einer ferritisch-austenitischen Duplexstahllegierung nach Anspruch 2 in erdölverarbeitenden Prozessen.

4. Verwendung einer ferritisch-austenitischen Duplexstahllegierung nach Anspruch 2 in hydrometallurgischen Prozessen.

5. Verwendung einer ferritisch-austenitischen Duplexstahllegierung nach einem der vorangegangenen Ansprüche, wobei der Gehalt an Ferrit vorzugsweise zwischen 42 und 60 Volumen-%, besonders bevorzugt zwischen 45 und 55 Volumen-% beträgt.

6. Verwendung einer ferritisch-austenitischen Duplexstahllegierung nach einem der vorangegangenen Ansprüche, wobei das Verhältnis zwischen dem PRE- oder PREW-Wert für die Austenitphase und dem PRE- oder PREW-Wert für die Ferritphase zwischen 0,9 und 1,05 liegt.

7. Verwendung einer ferritisch-austenitischen Duplexstahllegierung nach einem der vorangegangenen Ansprüche für die Herstellung von Produktformen, wie beispielsweise Stangen, Rohre, wie beispielsweise geschweißte und nahtlose Rohre, Platten, Streifen, Draht, Schweißdraht, Bauteile, wie beispielsweise Flansche und Kupplungen.

## Revendications

1. Utilisation d'un alliage d'acier inoxydable duplex austéno-ferritique présentant une résistance à la corrosion élevée en combinaison avec une bonne stabilité structurelle et une combinaison de propriétés mécaniques dans des applications présentant des environnements agressifs, ledit alliage ayant la composition suivante, en pourcentage en poids :
| | |
|---|---|
| C | maximum 0,03 % |
| Si | maximum 0,5 % |
| Mn | 0 à 3,0 % |
| Cr | 24,0 à 30,0 % |
| Ni | 4,9 à 10,0 % |
| Mo | 3,0 à 5,0 % |
| N | 0,28 à 0,5 % |
| B | 0 à 0,0030 % |
| S | maximum 0,010 % |
| Co | 0,5 à 3,5 % |
| W | 0 à 3,0 % |
| Cu | 0 à 2,0 % |
| Ru | 0 à 0,3 % |
| Al | 0 à 0,03 % |
| Ca | 0 à 0,010 % |
et le reste étant du Fe et les impuretés apparaissant normalement, et où la teneur en ferrite est de 40 à 65 % en volume, la valeur PRE ou la valeur PREW pour à la fois la phase ferrite et la phase austénite est supérieure à 45, et la valeur PRE ou la valeur PREW pour la composition totale de l'alliage est supérieure à 46 et le rapport entre la valeur PRE ou la valeur PREW pour la phase austénite et la valeur PRE ou la valeur PREW pour la phase ferrite est située 0,90 et 1,15.

2. Utilisation d'un alliage d'acier inoxydable duplex austéno-ferritique selon la revendication 1, dans des environnements contenant des chlorures.

3. Utilisation d'un alliage d'acier inoxydable duplex austéno-ferritique conformément à la revendication 2, dans des procédés de raffinage de pétrole.

4. Utilisation d'un alliage d'acier inoxydable duplex austéno-ferritique selon la revendication 2, dans des procédés hydrométallurgiques.

5. Utilisation d'un alliage d'acier inoxydable duplex austéno-ferritique selon l'une quelconque des revendications précédentes, où la teneur en ferrite est de préférence entre 42 et 60 % en volume, de façon plus préférée entre 45 et 55 % en volume.

6. Utilisation d'un alliage d'acier inoxydable duplex austéno-ferritique selon l'une quelconque des revendications précédentes, où le rapport entre la valeur PRE ou la valeur PREW pour la phase austénite et la valeur PRE ou la valeur PREW pour la phase ferrite est située entre 0,9 et 1,05.

7. Utilisation d'un alliage d'acier inoxydable duplex austéno-ferritique selon les revendications précédentes pour la fabrication de formes de produits telles que des barres, des tubes, tels que des tubes soudés et sans soudure, des plaques, des bandes, du fil, du fil de soudage, des parties de construction, telles que par exemple des brides et des dispositifs de couplage.
